# EUROPEAN PATENT APPLICATION

(11) **EP 4 838 572 A1**
(43) Date of publication of application: **11.11.2026**
(21) Application number: 24916467.4
(22) Date of filing: 27.09.2024
(51) Int. Cl.: H01M 4/136

(54) **POSITIVE ELECTRODE PLATE, SECONDARY BATTERY, AND ELECTRICAL APPARATUS**

(30) Priority: 08.01.2024 CN 202410027167
(71) Applicant: Contemporary Amperex Technology Co., Limited, Ningde, Fujian 352100 (CN)
(72) Inventor: BIE, Changfeng, Ningde, Fujian 352100 (CN); CHEN, Xudong, Ningde, Fujian 352100 (CN); SHANG, Yibo, Ningde, Fujian 352100 (CN); LIU, Hongyu, Ningde, Fujian 352100 (CN); LI, Xiaojing, Ningde, Fujian 352100 (CN); HUANG, Yang, Ningde, Fujian 352100 (CN); ZHANG, Limei, Ningde, Fujian 352100 (CN); NI, Huan, Ningde, Fujian 352100 (CN); LIU, Na, Ningde, Fujian 352100 (CN)
(74) Representative: Lorenz Seidler Gossel Part. mbB
(86) International application number: PCT/CN2024/122013
(87) International publication number: WO 2025/148416

(57) **Abstract**

A positive electrode plate, comprising a current collector and a positive electrode active layer, the positive electrode active layer being arranged on at least one surface of the current collector, and the positive electrode active layer comprising a first active layer directly coated on the current collector and a second active layer coated on the surface of the side of the first active layer furthest from the current collector side, wherein the first active layer comprises first lithium iron phosphate particles and the thickness of the first active layer is in the range of 15-60 µm, the second active layer comprises second lithium iron phosphate particles and/or second manganese iron phosphate particles and the thickness of the second active layer is in the range from 60-130 µm, the primary average particle size of the first lithium iron phosphate particles is 500-3000 nm, and that of the second lithium iron phosphate particles and/or the second manganese iron phosphate particles is 150-480 nm.

## Description

### CROSS-REFERENCE TO RELATED APPLICATIONS

The present application claims priority to Chinese Patent Application No. 202410027167.0, filed with the China National Intellectual Property Administration on January 8, 2024 and entitled "POSITIVE ELECTRODE PLATE, SECONDARY BATTERY, AND ELECTRICAL APPARATUS", which is incorporated herein by reference in its entirety.

### TECHNICAL FIELD

The present application relates to the technical field of secondary batteries, and in particular, to a positive electrode plate, a secondary battery, and an electrical apparatus.

### BACKGROUND

As a positive electrode material for a lithium-ion battery, lithium iron phosphate is rapidly becoming a hot spot for global research due to abundant resources, low price, environmental friendliness and stable voltage of two-phase reaction. The particle size of the lithium iron phosphate positive electrode active material used in the existing positive electrode plate, such as nanoscale lithium iron phosphate and lithium manganese iron phosphate, is relatively small, the specific surface area is relatively high, the water absorption is relatively strong when the lithium iron phosphate positive electrode active material contacts with air, so that side reactions are easy to occur on the solid-liquid surface, meanwhile, the phenomena of roller sticking, spreading and powder falling easily occur in the cold pressing process, the content of a binder required for actual coating is higher, and the capacity of a battery is actually affected by the use amount of the binder.

### SUMMARY

The present application has been made in view of the above problems, and an objective of the present application is to provide a positive electrode plate, a secondary battery, and an electrical apparatus, in which a coating weight is increased and cracking is less likely to occur when a thicker active material is applied to the positive electrode plate, and which can maintain good kinetic performance and a higher energy density.

A first aspect of the present application provides a positive electrode plate, which includes a current collector and a positive electrode active layer. The positive electrode active layer is arranged on at least one surface of the current collector, and the positive electrode active layer includes a first active layer directly arranged on the current collector and a second active layer arranged on a surface of one side of the first active layer away from the current collector. The first active layer includes first lithium iron phosphate particles, and a thickness of the first active layer ranges from 15 µm to 60 µm. The second active layer includes second lithium iron phosphate particles and/or second lithium manganese iron phosphate particles, and a thickness of the second active layer ranges from 60 µm to 130 µm. A primary average particle size of the first lithium iron phosphate particles is 500 nm to 3000 nm, and a primary average particle size of the second lithium iron phosphate particles and/or the second lithium manganese iron phosphate particles is 150 nm to 480 nm.

As described above, the positive electrode plate of the present application is provided with the positive electrode active layer including the first active layer and the second active layer. The first active layer includes the lithium iron phosphate particles having a larger primary average particle size near the current collector, and the second active layer includes the lithium iron phosphate particles and/or the lithium manganese iron phosphate particles (simply referred to as "lithium (manganese) iron phosphate particles") having a smaller primary average particle size away from the current collector.

By making the primary average particle sizes of the first lithium iron phosphate particles and the second lithium iron phosphate particles and/or the second lithium manganese iron phosphate particles of the embodiment of the present application within the above ranges, respectively, the particles can be kept in a suitable micron-level size, thereby avoiding the problems of interfacial side reactions and processing difficulties caused when the particles are nanocrystallized, and not causing the particles to be limited to an excessively large size and causing a decrease in the kinetic performance. Further, by setting the thicknesses of the first active layer and the second active layer in the above ranges, the first active layer disposed between the second active layer and the current collector can be made to function well as a transition layer, and the current collector and the second active layer can be bonded well, so that the positive electrode plate has a stable layer structure, which contributes to maintaining a high compaction density and a high energy density of the positive electrode plate.

Therefore, the positive electrode plate according to the embodiment of the present application has the above structure, and thus, even when a thicker positive electrode active material is applied, cracking is less likely to occur, and a secondary battery including the positive electrode plate can maintain good kinetic performance and high energy density.

In any embodiment, a binding force f between the first active layer and the current collector satisfies 8 N/m≤f≤30 N/m.

In the positive electrode plate of the embodiment of the present application, the binding force between the first active layer and the current collector is excellent, so that the positive electrode plate can maintain good structural stability, and the high compaction density and the high energy density of the positive electrode plate can be maintained.

In any embodiment, a weight ratio of the first lithium iron phosphate particles to the second lithium iron phosphate particles and/or the second lithium manganese iron phosphate particles is 1:2 to 1:10, and in some embodiments is 1:3 to 1:5.

By making the weight ratio of the first lithium iron phosphate particles to the second lithium iron phosphate particles and/or the second lithium manganese iron phosphate particles in the positive electrode plate within the above range, that is, making a mass proportion of the first lithium iron phosphate particles smaller than that of the second lithium iron phosphate particles and/or the second lithium manganese iron phosphate particles, a positive electrode active material layer can maintain high binding property, maintain high compaction density of the positive electrode plate, and the secondary battery including the positive electrode plate can maintain good kinetic performance and high energy density.

In any embodiment, a porosity of the first lithium iron phosphate particles is greater than that of the second lithium iron phosphate particles and/or the second lithium manganese iron phosphate particles. In any embodiment, the porosity of the first lithium iron phosphate particles is 28% to 36%, and in some embodiments is 30% to 34%; and the porosity of the second lithium iron phosphate particles and/or the second lithium manganese iron phosphate particles is 24% to 32%, and in some embodiments is 26% to 30%.

By setting the porosity of the first lithium iron phosphate particles and the second lithium iron phosphate particles and/or the second lithium manganese iron phosphate particles in the above ranges, respectively, and making the porosity of the first lithium iron phosphate particles larger than that of the second lithium iron phosphate particles and/or the second lithium manganese iron phosphate particles, diffusion of an electrolyte solution when approaching the positive electrode plate can be facilitated, an infiltration rate of the electrolyte solution is increased, polarization of a positive electrode material is reduced, and the kinetic performance of the positive electrode plate is improved.

In any embodiment, a BET specific surface area of the first lithium iron phosphate particles is 3 m²/g to 8 m²/g, and in some embodiments is 4 m²/g to 7 m²/g; and a BET specific surface area of the second lithium iron phosphate particles and/or the second lithium manganese iron phosphate particles is 10 m²/g to 18 m²/g, and in some embodiments is 12 m²/g to 16 m²/g.

By setting the BET specific surface area of the first lithium iron phosphate particles and the BET specific surface area of the second lithium iron phosphate particles and/or the second lithium manganese iron phosphate particles of the embodiment of the present application in the above ranges, respectively, stirring of a slurry containing the lithium iron phosphate particles and improvement of a solid content can be facilitated, and thus the processing problem of a battery cell can be improved, and further a volumetric energy density of the battery can be improved.

In any embodiment, the first lithium iron phosphate particles include carbon, and calculated based on a total weight of the first lithium iron particles, a carbon content is 0.8 wt% to 2.0 wt%.

By setting the carbon content of the first lithium iron phosphate particles to 0.8 wt% to 2.0 wt%, carbon can be coated on the surfaces of the first lithium iron phosphate particles, so that a first lithium iron phosphate material with a uniform and compact carbon coating layer is formed, and a surface conductivity of the particles can be greatly improved.

In the first lithium iron phosphate particles according to the embodiment of the present application, carbon may be present in a state of being mixed with the first lithium iron phosphate particles, or may be present in a state of being coated on the first lithium iron phosphate particles. In some embodiments, carbon in the first lithium iron phosphate particles is in the state of being coated on the first lithium iron phosphate particles, so that the carbon can form a uniform and compact carbon coating layer on the surfaces of the first lithium iron phosphate particles, and the surface conductivity of the particles is improved.

In any embodiment, the first lithium iron phosphate particles have a molecular formula of LiₘFeₓP_{y}OⱼQ_{q}, where Q includes at least one of Al, Na, K, Mg, Cu, Mn, Cr, Zn, Pb, Ca, Co, Ni, Sr, Nb, V, Ti, B, S, Si, N, S, F, Cl, and Br, 0.95≤m≤1.15, 0.9≤x≤1, 0.95≤y≤1, 3.5≤j≤4, and 0<q≤0.1.

By making the first lithium iron phosphate of the embodiment of the present application have the above molecular formula and adding one or more elements described above into the first lithium iron phosphate, high-loading bulk modification of the first lithium iron phosphate particles is realized, which is helpful to improve a bulk ion transmission capacity of the first lithium iron phosphate particles and can effectively solve the problem of poor inherent kinetic performance of large particles. Further, by performing the modification treatment, the first lithium iron phosphate particles can be made to exhibit good kinetic performance when used as a positive electrode material.

In any embodiment, Q includes at least one of Ti, V, Mg, and Nb, and in some embodiments is Ti. Calculated based on the total weight of the first lithium iron phosphate particles, a content of Q is 1000 ppm to 10000 ppm, and in some embodiments is 2500 ppm to 6000 ppm.

By adding one or more elements described above to the first lithium iron phosphate of the embodiment of the present application and making the content within the above ranges, it is possible to more favorably realize metal bulk modification of the first lithium iron phosphate particles while ensuring the primary average particle size of the first lithium iron phosphate particles, further improving the bulk ion transmission capacity of the first lithium iron phosphate particles, and more favorably solving the problem of poor inherent kinetic performance of the large particles.

In any embodiment, the second lithium iron phosphate particles and/or the second lithium manganese iron phosphate particles have a molecular formula of LiₘAₐFe_{f}Mn_{b}D_{d}P_{y}EₑOₚG_{g}, where A includes at least one element of Al, Na, K, or Mg; D includes at least one element of Cu, Cr, Zn, Pb, Ca, Co, Ni, Sr, Nb, Ti, or V; E includes at least one element of B, S, Si, or N; G includes at least one element of F, Cl, or Br; where 0.95≤m≤1.15, 0≤a≤0.1, 0.1≤f≤1, 0.1≤b≤0.9, 0≤d≤0.1, 0.95≤y≤1, 0≤e≤0.1, 3.5≤p≤4, and 0≤g≤0.1.

In the present application, the composition of the second lithium iron phosphate particles and/or the second lithium manganese iron phosphate particles is not particularly limited, and any existing second lithium iron phosphate particles and/or second lithium manganese iron phosphate particles can be used. Exemplarily, in the embodiment of the present application, the above effects of the present application can be better achieved by employing the second lithium iron phosphate particles and/or the second lithium manganese iron phosphate particles having the above composition and forming a double layer structure with the first lithium iron phosphate particles in the embodiment of the present application.

In any embodiment, the first lithium iron phosphate particles, and the second lithium iron phosphate particles and/or the second lithium manganese iron phosphate particles are monocrystalline particles and/or polycrystalline particles. In some embodiments, calculated based on a total particle quantity of the first lithium iron particles, a quantity proportion of the monocrystalline particles is 90% or above.

By adopting the monocrystalline particles of the first lithium iron phosphate in the above proportion in the first active layer of the positive electrode plate of the present application, the phenomenon that polycrystalline particles are crushed in a cold pressing process to cause demoulding can be effectively avoided, so that the binding force between the first active layer and the current collector or the second active layer can be improved, and the kinetic performance and the energy density of the positive electrode plate can be further improved.

In any embodiment, a capacity proportion η of the first lithium iron phosphate is ≥88%, where η is defined as follows: a battery including the first lithium iron phosphate particles as a positive electrode material is charged and discharged twice at a constant-current rate of 0.1 C and a voltage ranging from 2.0 V to 3.75 V, and is then charged and discharged once at a constant-current rate of 1 C; in the charge-discharge test at the rate of 1 C, a capacity value extracted when a discharge voltage is 3.2 V is recorded as C1, and a capacity value extracted when the discharge voltage reaches 2.0 V is recorded as C2, η=C1/C2, where the charging process includes constant-voltage charging, the constant voltage is 3.75 V, and a constant-voltage cut-off current is 50 uA.

The capacity proportion η of the first lithium iron phosphate particles of the embodiment of the present application is ≥88%, which means that the first lithium iron phosphate particles of the present application can enable the secondary battery to show good kinetic performance when being used as a positive electrode material.

η represents the plateau retention performance of a material, which has a strong correlation with the discharge power performance of the battery. When the value is larger, the battery can still maintain relatively good power performance when the battery is discharged to a low SOC (battery state of charge), i.e., a voltage reduction value of the battery is relatively small when the battery is discharged with a large current at a low battery level. A capacity proportion η of the second lithium iron phosphate particles of the embodiment of the present application is ≥88%, which means that the second lithium iron phosphate particles of the present application can enable the secondary battery to show good kinetic performance when being used as a positive electrode material.

In any embodiment, the first lithium iron phosphate particles satisfy at least one of the following a) to f):
a) Dv10 of the first lithium iron particles is ≥0.2 µm;
b) Dv50 of the first lithium iron particles is 0.5 µm to 5 µm;
c) Dv90 of the first lithium iron particles is ≤8 µm;
d) Dv99 of the first lithium iron particles is ≤10 µm;
e) a powder compaction density of the first iron lithium under the pressure of 3 T is ≥2.25 g/cm³; and
f) a powder resistivity of the first lithium iron is less than 60 Ω·cm.

In the present application, Dv10, Dv90, and Dv99 refer to particle sizes corresponding to cumulative volume particle size distribution percentages of 10%, 90%, and 99%, respectively, in the particles. The test method is the same as that of Dv50, and can be performed by using the standard in the examples of the present application.

It should be noted that the Dv10 is a larger-the-better index, and therefore an upper limit cannot be given, and the Dv90 is a smaller-the-better index, and therefore a lower limit cannot be given.

By making the first lithium iron phosphate particles satisfy at least one of a) to f), the above technical effect can be achieved more favorably with the first lithium iron phosphate particles.

In the present application, a test method of the powder resistivity is as follows: referring to national standard GB/T 33822-2017, a powder resistivity meter (Suzhou Lattice, Model ST2722) is adopted, 1 g of sample (error is within +/-0.005 g) is weighed and added into a feeding cavity, 8 MPa pressure is applied, a positive resistivity and a reverse resistivity of the sample are respectively tested, and an average value of the positive resistivity and the reverse resistivity is taken as the powder resistivity of the sample.

In the present application, the powder compaction density is defined as the density of a compact with certain density and strength, expressed in g/cm³, where in a process of external force compression, as the powder moves and deforms, larger gaps are filled, a contact area between particles is increased, an attractive force between atoms is generated, and mechanical fit between the particles is enhanced, so that the compact is formed.

A test method of the compaction density is as follows: referring to national standard GB/T 24533-2009, placing certain amount of powder on a compaction die, where the die is hollow in the middle with one metal disc at an upper end and one metal disc at a lower end, respectively. The powder is placed between the metal discs, a metal cylinder is provided at the top, the die is placed on a compaction density instrument, different pressures are set, a thickness of the powder under the different pressures can be read out on the instrument, and the compaction density is calculated through ρ=m/v.

Results are calculated according to the following powder compaction density, ρc=m/V=m/(S×H), where ρc is the powder compaction density (g/cm³), m is the mass of the weighed material (g), S is the bottom area of the die (1.327 cm²), and H is the height of the compacted sample (cm).

In any embodiment, a manufacturing process of the first lithium iron phosphate particles includes: providing raw materials containing at least a lithium source, an iron source, a phosphorus source, and a carbon source, and performing sintering at least twice. A temperature of the first sintering is 500°C to 760°C, and in some embodiments is 550°C to 720°C, and a carbon content of the material after the first sintering is 0.01 wt% to 0.79 wt%, and in some embodiments is 0.05 wt% to 0.4 wt%. A temperature of the second sintering is 700°C to 800°C, and in some embodiments is 720°C to 780°C, and a carbon content of the material after the second sintering is 0.8 wt% to 2.0 wt%, and in some embodiments is 1.0 wt% to 1.6 wt%.

In the preparation process of the first lithium iron phosphate particles according to the embodiment of the present application, sintering is performed twice. By controlling the temperature of the first sintering within the above range and enabling the carbon content of a sintered intermediate within the above range, a lithium iron phosphate precursor obtained after the first sintering can have a relatively large primary particle size, which directly improves the powder compaction density and electrode plate compaction density of a final product. Meanwhile, the carbon source added before the first sintering can effectively reduce ferric iron in the raw material to improve the product purity and stability. By controlling the temperature of the second sintering within the above range and making the carbon content of a sintered material be 0.8 wt% to 2.0 wt%, carbon is coated on the surfaces of the first lithium iron particles, a lithium iron phosphate material with a uniform and compact carbon coating layer is formed, and the surface conductivity of the particles is greatly improved.

In any embodiment, first crushing is performed after the first sintering, and second crushing is performed after the second sintering. Dv50 of a product after the first crushing is 300 nm to 1200 nm, and in some embodiments is 400 nm to 1100 nm; and Dv50 of a product after the second crushing is 500 nm to 5000 nm, and in some embodiments is 700 nm to 2500 nm.

In the preparation method of the first lithium iron particles according to the embodiment of the present application, crushing after sintering is performed twice. By performing the first crushing after the first sintering, the primary average particle size of the product is enabled to be 300 nm to 1200 nm, so that growth blocking of carbon materials and doping elements on crystals can be avoided, and the micron-sized lithium iron phosphate precursor is obtained. By performing the second crushing after the second sintering, the primary average particle size of the product is enabled to be 500 nm to 3000 nm, so that lithium iron phosphate particles with expected particle size can be obtained, the uniform and compact carbon coating layer is obtained, and the surface conductivity of the particles is greatly improved.

In any embodiment, the first active layer and the second active layer may further optionally include a conductive agent, a binder, and a dispersant. In the first active layer, in the first active layer, a weight ratio of the first lithium iron phosphate particles to the binder to the conductive agent to the dispersant is 96-99:0.5-3:0.5-3:0.5-3, and in some embodiments is 96.5:0.5:2.5:0.5. In the second active layer, a weight ratio of the second lithium iron phosphate particles and/or the second lithium manganese iron phosphate particles to the binder to the conductive agent to the dispersant is 96-99:0.5-3:0.5-3:0.5-3, and in some embodiments is 96:1.0:2.5:0.5. The weight ratio of the binder in the second active layer is less than or equal to the weight ratio of the binder in the first active layer.

In any embodiment, the conductive agent includes any one or a combination of at least two of natural graphite, artificial graphite, conductive carbon black, carbon fiber, carbon nanotube, graphene, and conductive polymer or metal powder, and in some embodiments is conductive carbon black. The binder includes any one or a combination of at least two of polyvinylidene fluoride, a copolymer of vinylidene fluoride and hexafluoropropylene, or polytetrafluoroethylene, and in some embodiments is polyvinylidene fluoride. The dispersant is not particularly limited as long as it is a dispersant commonly used in the art, and includes PVP (polyvinylpyrrolidone) and the like.

The positive electrode active layer of the present application can be made to better achieve the above effects of the present application by using the specific conductive agent, binder, and dispersant described above, and making the weight ratio of the first lithium iron phosphate particles to the binder to the conductive agent to the dispersant within the above range.

In any embodiment, a weight of the positive electrode active layer on one side of the positive electrode plate is 320 mg/1540 mm² to 600 mg/1540 mm², and in some embodiments is 400 mg/1540 mm² to 500 mg/1540 mm².

By controlling the weight of the positive electrode active layer on one side of the positive electrode plate within the above range, a higher coating weight on the positive electrode plate can be ensured, and better energy density of the positive electrode plate can be ensured.

In any embodiment, a compaction density of the positive electrode active layer on the positive electrode plate is 2.40 g/cm³ to 2.7 g/cm³, and in some embodiments is 2.50 g/cm³ to 2.60 g/cm³.

By controlling the compaction density of the positive electrode active layer on the positive electrode plate within the above range, a higher volumetric energy density can be achieved.

A second aspect of the present application provides a secondary battery, which includes the positive electrode plate according to the first aspect of the present application.

A third aspect of the present application provides an electrical apparatus, which includes the secondary battery according to the second aspect of the present application.

### BRIEF DESCRIPTION OF THE DRAWINGS

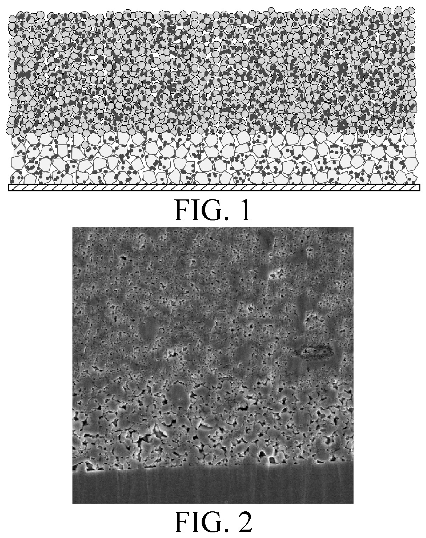

FIG. 1 is a schematic structural diagram of a positive electrode plate according to an embodiment of the present application;
FIG. 2 is an electron microscope image of a positive electrode plate according to an embodiment of the present application;
FIG. 3 is a schematic diagram exemplarily showing a particle size of primary particles of the present application;

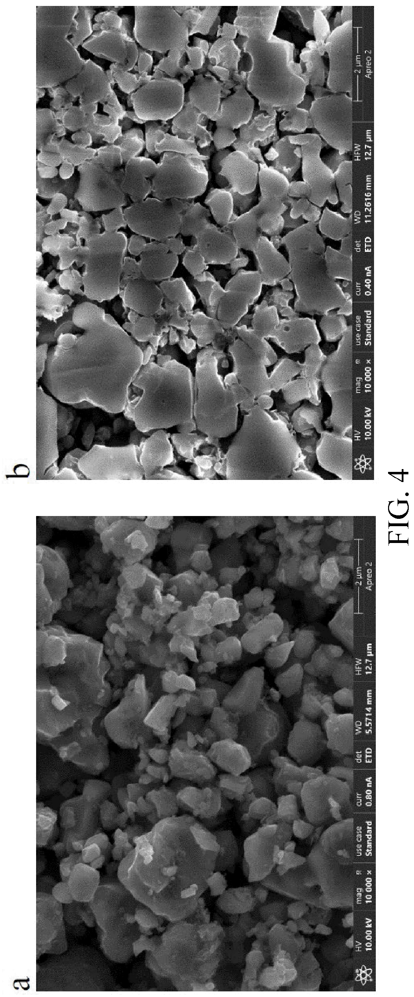

FIG. 4 is an electron microscope image (FIG. 4a) and an electrode plate slice image (FIG. 4b) of existing large-particle monocrystal lithium iron phosphate;
FIG. 5 is a schematic diagram of a secondary battery according to an embodiment of the present application;
FIG. 6 is an exploded view of the secondary battery according to an embodiment of the present application shown in FIG. 5;
FIG. 7 is a schematic diagram of a battery module according to an embodiment of the present application;
FIG. 8 is a schematic diagram of a battery pack according to an embodiment of the present application;
FIG. 9 is an exploded view of the battery pack according to an embodiment of the present application shown in FIG. 8; and
FIG. 10 is a schematic diagram of an electrical apparatus using a secondary battery as a power source according to an embodiment of the present application.

### Description of reference numerals:

1 battery pack; 2 upper box; 3 lower box; 4 battery module; 5 secondary battery; 51 case; 52 electrode assembly; and 53 cover plate.

### DETAILED DESCRIPTION

Embodiments of the positive electrode plate, the secondary battery, and the electrical apparatus according to the present application are described in detail below. However, unnecessary detailed description may be omitted. For example, detailed descriptions of well-known matters and repeated descriptions of the actual same structure may be omitted. This is to avoid that the following description becomes unnecessarily lengthy, facilitating the understanding of those skilled in the art. Furthermore, the drawings and the following description are provided for a full understanding of the present application by those skilled in the art, and are not intended to limit the subject matter recited in the claims.

The "range" disclosed in the present application is defined in terms of lower and upper limits, with the given range being defined by the selection of a lower limit and an upper limit, the selected lower and upper limits defining the boundaries of the particular range. Ranges that are defined in this way can be inclusive or exclusive of the endpoints, and any combination can be made, i.e., any lower limit can be combined with any upper limit to form a range. For example, if ranges of 60 to 120 and 80 to 110 are listed for a particular parameter, it is understood that ranges of 60 to 110 and 80 to 120 are also contemplated. Furthermore, if minimum range values 1 and 2 are listed, and if maximum range values 3, 4, and 5 are listed, the following ranges are all contemplated: 1 to 3, 1 to 4, 1 to 5, 2 to 3, 2 to 4, and 2 to 5. In the present application, unless otherwise indicated, the numerical range "a to b" represents a shorthand representation of any combination of real numbers between a and b, where a and b are both real numbers. For example, the numerical range "0 to 5" indicates that all real numbers between "0 to 5" have been listed herein, and "0 to 5" is only a shorthand representation of combinations of these values. When certain parameter is expressed as an integer being great than or equal to 2, it is disclosed that the parameter is, for example, an integer of 2, 3, 4, 5, 6, 7, 8, 9, 10, 11, 12 or the like.

All embodiments and optional embodiments of the present application may be combined with each other to form new technical solutions, unless otherwise specified.

All technical features and optional technical features of the present application may be combined with each other to form new technical solutions, unless otherwise specified.

All steps of the present application may be performed sequentially, or may be performed randomly, optionally being performed sequentially, unless otherwise specified. For example, the method includes steps (a) and (b), meaning that the method may include steps (a) and (b) performed sequentially, or may include steps (b) and (a) performed sequentially. For example, the method may further include step (c), meaning that step (c) may be added to the method in any order, for example, the method may include steps (a), (b) and (c), may include steps (a), (c) and (b), may include steps (c), (a) and (b), and the like.

The terms "including" and "comprising" as used herein mean open ended or closed ended, unless otherwise specified. For example, the terms "including" and "comprising" may mean that other components not listed may be included or comprised, or that only listed components may be included or comprised.

The term "or" is inclusive in the present application, unless otherwise specified. For example, the phrase "A or B" means "A, B, or both A and B". More specifically, either condition satisfies the condition "A or B" that A is true (or present) and B is false (or absent), that A is false (or absent) and B is true (or present), or that both A and B are true (or present).

The particle size of the lithium iron phosphate positive electrode active material used in the existing positive electrode plate, such as nanoscale lithium iron phosphate and lithium manganese iron phosphate, is relatively small, and the specific surface area is relatively high, so that the lithium iron phosphate positive electrode active material is extremely easy to crack when the coating amount is too large in the coating process, and the kinetic performance and the energy density of the battery are affected.

Based on the above, the present application provides a positive electrode plate, which not only increases the coating weight and is not easy to crack under the condition of coating thicker active materials, but also can maintain good kinetic performance and higher energy density.

### [Positive Electrode Plate]

The positive electrode plate of the embodiment of the present application includes a current collector and a positive electrode active layer. The positive electrode active layer is arranged on at least one surface of the current collector, and the positive electrode active layer includes a first active layer directly arranged on the current collector and a second active layer arranged on a surface of one side of the first active layer away from the current collector. The first active layer includes first lithium iron phosphate particles, and a thickness of the first active layer ranges from 15 micrometers (µm) to 60 µm. The second active layer includes second lithium iron phosphate particles and/or second lithium manganese iron phosphate particles, and a thickness of the second active layer ranges from 60 µm to 130 µm. A primary average particle size of the first lithium iron phosphate particles is 500 nanometers (nm) to 3000 nm, and a primary average particle size of the second lithium iron phosphate particles and/or the second lithium manganese iron phosphate particles is 150 nm to 480 nm.

In some embodiments, the thickness of the first active layer is optionally 15 µm, 18 µm, 21 µm, 24 µm, 27 µm, 30 µm, 33 µm, 36 µm, 39 µm, 42 µm, 45 µm, 48 µm, 51 µm, 54 µm, 57 µm, or 60 µm, or a range between any two of the above values. In some embodiments, the thickness of the second active layer is optionally 60 µm, 63 µm, 66 µm, 69 µm, 70 µm, 72 µm, 75 µm, 78 µm, 80 µm, 81 µm, 84 µm, 87 µm, 90 µm, 93 µm, 96 µm, 99 µm, 100 µm, 103 µm, 106 µm, 109 µm, 110 µm, 113 µm, 116 µm, 119 µm, 120 µm, 123 µm, 126 µm, 129 µm, or 130 µm, or a range between any two of the above values.

In some embodiments, the primary average particle size of the first lithium iron phosphate particles is optionally 500 nm, 600 nm, 700 nm, 800 nm, 900 nm, 1000 nm, 1100 nm, 1200 nm, 1300 nm, 1400 nm, 1500 nm, 1600 nm, 1700 nm, 1800 nm, 1900 nm, 2000 nm, 2100 nm, 2200 nm, 2300 nm, 2400 nm, 2500 nm, 2600 nm, 2700 nm, 2800 nm, 2900 nm, or 3000 nm, or a range between any two of the above values. The primary average particle size of the second lithium iron phosphate particles is optionally 150 nm, 160 nm, 170 nm, 180 nm, 190 nm, 200 nm, 210 nm, 220 nm, 230 nm, 240 nm, 250 nm, 260 nm, 270 nm, 280 nm, 290 nm, 300 nm, 310 nm, 320 nm, 330 nm, 340 nm, 350 nm, 360 nm, 370 nm, 380 nm, 390 nm, 400 nm, 410 nm, 420 nm, 430 nm, 440 nm, 450 nm, 460 nm, 470 nm, or 480 nm, or a range between any two of the above values.

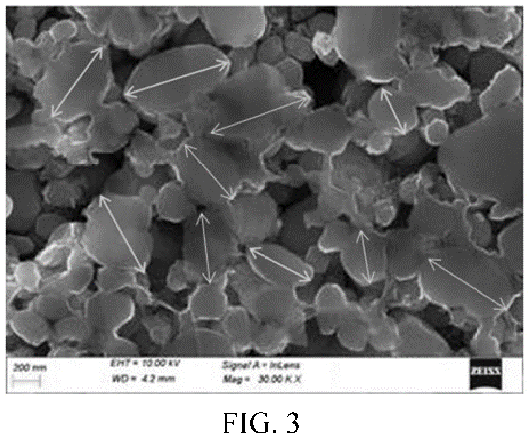

As used herein, the term "primary average particle size" refers to a particle size value obtained by statistically analyzing the particle size of particles by a length-diameter statistical method under the field of view of a scanning electron microscope. In the particle size statistics process, particles with a primary average particle size of less than or equal to 50 nm are not counted into the statistical range. The primary average particle size of the present application is shown in FIG. 3. The primary average particle size refers to an average particle size of primary particles. "Primary particles" refer to particles that have no obvious agglomeration interface in a particle scanning electron microscope image, but may have microscopic pores and point or line defects, as distinguished from powder particles that have no minimal units of structure such as accumulation and flocculation. The primary average particle size can be determined by the determination method described in examples.

By making the primary average particle sizes of the first lithium iron phosphate particles and the second lithium iron phosphate particles and/or the second lithium manganese iron phosphate particles of the embodiment of the present application within the above ranges, respectively, the particles can be kept in a suitable micron-level size, thereby avoiding the problems of interfacial side reactions and processing difficulties caused when the particles are nanocrystallized, and not causing the particles to be limited to an excessively large size and causing a decrease in the kinetic performance. Further, by setting the thicknesses of the first active layer and the second active layer in the above ranges, the first active layer disposed between the second active layer and the current collector can be made to function well as a transition layer, and the current collector and the second active layer can be bonded well, so that the positive electrode plate has a stable layer structure, which contributes to maintaining a high compaction density and a high energy density of the positive electrode plate.

Therefore, the positive electrode plate according to the embodiment of the present application has the above structure, and thus, even when a thicker positive electrode active material is applied, cracking is less likely to occur, and a secondary battery including the positive electrode plate can maintain good kinetic performance and high energy density.

In any embodiment, a binding force f between the first active layer and the current collector satisfies 8 Newtons/meter (N/m)≤f≤30 N/m.

In the positive electrode plate of the embodiment of the present application, the binding force between the first active layer and the current collector is excellent, so that the positive electrode plate can maintain good structural stability, and the high compaction density and the high energy density of the positive electrode plate can be maintained.

The binding force can be determined by the determination method in examples of the present application.

In any embodiment, a weight ratio of the first lithium iron phosphate particles to the second lithium iron phosphate particles and/or the second lithium manganese iron phosphate particles is 1:2 to 1:10, and in some embodiments is 1:3 to 1:5.

By making the weight ratio of the first lithium iron phosphate particles to the second lithium iron phosphate particles and/or the second lithium manganese iron phosphate particles in the positive electrode plate within the above range, that is, making a mass proportion of the first lithium iron phosphate particles smaller than that of the second lithium iron phosphate particles and/or the second lithium manganese iron phosphate particles, a positive electrode active material layer can maintain high binding property, maintain high compaction density of the positive electrode plate, and the secondary battery including the positive electrode plate can maintain good kinetic performance and high energy density.

In any embodiment, a porosity of the first lithium iron phosphate particles is greater than that of the second lithium iron phosphate particles and/or the second lithium manganese iron phosphate particles. In any embodiment, the porosity of the first lithium iron phosphate particles is 28% to 36%, and in some embodiments is 30% to 34%; and the porosity of the second lithium iron phosphate particles and/or the second lithium manganese iron phosphate particles is 24% to 32%, and in some embodiments is 26% to 30%.

By setting the porosity of the first lithium iron phosphate particles and the second lithium iron phosphate particles and/or the second lithium manganese iron phosphate particles in the above ranges, respectively, and making the porosity of the first lithium iron phosphate particles larger than that of the second lithium iron phosphate particles and/or the second lithium manganese iron phosphate particles, diffusion of an electrolyte solution when approaching the positive electrode plate can be facilitated, an infiltration rate of the electrolyte solution is increased, polarization of a positive electrode material is reduced, and the kinetic performance of the positive electrode plate is improved.

In any embodiment, the weight ratio of the first lithium iron phosphate particles to the second lithium iron phosphate particles and/or the second lithium manganese iron phosphate particles is 1:2 to 1:10, and in some embodiments is 1:3 to 1:5.

In some embodiments, the weight ratio of the first lithium iron phosphate particles to the second lithium iron phosphate particles and/or the second lithium manganese iron phosphate particles is optionally 1:2, 1:3, 1:4, 1:5, 1:6, 1:7, 1:8, 1:9, or 1:10, or a range between any two of the above values.

By making the weight ratio of the first lithium iron phosphate particles to the second lithium iron phosphate particles and/or the second lithium manganese iron phosphate particles in the positive electrode plate within the above range, that is, making a mass proportion of the first lithium iron phosphate particles smaller than that of the second lithium iron phosphate particles and/or the second lithium manganese iron phosphate particles, a positive electrode active material layer can maintain high binding property, maintain high compaction density of the positive electrode plate, and the secondary battery including the positive electrode plate can maintain good kinetic performance and high energy density.

In any embodiment, the porosity of the first lithium iron phosphate particles is 28% to 36%, and in some embodiments is 30% to 34%; and the porosity of the second lithium iron phosphate particles and/or the second lithium manganese iron phosphate particles is 24% to 32%, and in some embodiments is 26% to 30%. In any embodiment, the porosity of the first lithium iron phosphate particles is greater than that of the second lithium iron phosphate particles and/or the second lithium manganese iron phosphate particles.

In some embodiments, the porosity of the first lithium iron phosphate particles is optionally 28%, 29%, 30%, 31%, 32%, 33%, 34%, 35%, or 36%, or a range between any two of the above values. In some embodiments, the porosity of the second lithium iron phosphate particles and/or the second lithium manganese iron phosphate particles is optionally 24%, 25%, 26%, 27%, 28%, 29%, 30%, 31%, or 32%, or a range between any two of the above values.

Herein, the term "porosity" refers to the ratio of the sum of all pore space volumes in a sample to the volume of the sample, expressed as a percentage. The porosity can be determined by the determination method described in examples of the present application.

By setting the porosity of the first lithium iron phosphate particles and the second lithium iron phosphate particles and/or the second lithium manganese iron phosphate particles in the above ranges, respectively, that is, by making the porosity of the first lithium iron phosphate particles larger than that of the second lithium iron phosphate particles and/or the second lithium manganese iron phosphate particles, diffusion of an electrolyte solution when approaching the positive electrode plate can be facilitated, an infiltration rate of the electrolyte solution is increased, polarization of a positive electrode material is reduced, and the kinetic performance of the positive electrode plate is improved.

In any embodiment, a BET specific surface area of the first lithium iron phosphate particles is 3 square meters/gram (m²/g) to 8 m²/g, and in some embodiments is 4 m²/g to 7 m²/g; and a BET specific surface area of the second lithium iron phosphate particles and/or the second lithium manganese iron phosphate particles is 10 m²/g to 18 m²/g, and in some embodiments is 12 m²/g to 16 m²/g.

In some embodiments, the BET specific surface area of the first lithium iron phosphate particles is optionally 3 m²/g, 4 m²/g, 5 m²/g, 6 m²/g, 7 m²/g, or 8 m²/g, or a range between any two of the above values. In some embodiments, the BET specific surface area of the second lithium iron phosphate particles is optionally 10 m²/g, 11 m²/g, 12 m²/g, 13 m²/g, 14 m²/g, 15 m²/g, 16 m²/g, 17 m²/g, or 18 m²/g, or a range between any two of the above values. Herein, a determination method of the BET specific surface area can be performed by the determination method described in examples.

By setting the BET specific surface area of the first lithium iron phosphate particles and the BET specific surface area of the second lithium iron phosphate particles and/or the second lithium manganese iron phosphate particles of the embodiment of the present application in the above ranges, respectively, stirring of a slurry containing the lithium iron phosphate particles and improvement of a solid content can be facilitated, and thus the processing problem of a battery cell can be improved, and further a volumetric energy density of the battery can be improved.

In any embodiment, the first lithium iron phosphate particles include carbon, and calculated based on a total weight of the first lithium iron particles, a carbon content is 0.8 wt% to 2.0 wt%.

In some embodiments, calculated based on the total weight of the first lithium iron phosphate particles, the carbon content is optionally 0.8 wt%, 0.9 wt%, 1.0 wt%, 1.1 wt%, 1.2 wt%, 1.3 wt%, 1.4 wt%, 1.5 wt%, 1.6 wt%, 1.7 wt%, 1.8 wt%, 1.9 wt%, or 2.0 wt%, or a range between any two of the above values.

By setting the carbon content of the first lithium iron phosphate particles to 0.8 wt% to 2.0 wt%, carbon can be coated on the surfaces of the first lithium iron particles, so that a lithium iron phosphate material with a uniform and compact carbon coating layer is formed, and a surface conductivity of the particles is greatly improved.

In the lithium iron phosphate particles according to the embodiment of the present application, carbon may be present in a state of being mixed with the first lithium iron particles, or may be present in a state of being coated on the first lithium iron particles. In some embodiments, carbon in the first lithium iron particles is in the state of being coated on the first lithium iron particles, so that the carbon can form a uniform and compact carbon coating layer on the surfaces of the first lithium iron particles, and the surface conductivity of the particles is improved.

In some embodiments, by making a ratio z of the BET specific surface area to Cx of the first lithium iron phosphate particles of the embodiments of the present application satisfy the range of 1.5≤z≤8.5, the carbon contained in the first lithium iron particles can be made more uniform and compact, thereby improving the surface conductivity of the particles.

In any embodiment, the first lithium iron phosphate particles have a molecular formula of LiₘFeₓP_{y}OⱼQ_{q}, where Q includes at least one of Al, Na, K, Mg, Cu, Mn, Cr, Zn, Pb, Ca, Co, Ni, Sr, Nb, V, Ti, B, S, Si, N, S, F, Cl, and Br, 0.95≤m≤1.15, 0.9≤x≤1, 0.95≤y≤1, 3.5≤j≤4, and 0<q≤0.1.

By making the first lithium iron phosphate of the embodiment of the present application have the above molecular formula and adding one or more elements described above into the first lithium iron phosphate for modification, high-loading bulk modification of the first lithium iron phosphate particles is realized, which is helpful to improve a bulk ion transmission capacity of the first lithium iron phosphate particles and can effectively solve the problem of poor inherent kinetic performance of large particles. Further, by performing the above modification, the first lithium iron phosphate particles can be made to exhibit good kinetic performance when used as a positive electrode material. In the present application, the modification may specifically be doping and/or coating.

In any embodiment, Q includes at least one of Ti, V, Mg, and Nb, and in some embodiments is Ti. Calculated based on the total weight of the first lithium iron phosphate particles, a content of Q is 1000 parts per million (1000 ppm) to 10000 ppm, and in some embodiments is 2500 ppm to 6000 ppm.

In some embodiments, calculated based on the total weight of the first lithium iron phosphate particles, a content of Ti, V, Mg, and/or Nb is optionally 2500 ppm, 2600 ppm, 2700 ppm, 2800 ppm, 2900 ppm, 3000 ppm, 3100 ppm, 3200 ppm, 3300 ppm, 3400 ppm, 3500 ppm, 3600 ppm, 3700 ppm, 3800 ppm, 3900 ppm, 4000 ppm, 4100 ppm, 4200 ppm, 4300 ppm, 4400 ppm, 4500 ppm, 4600 ppm, 4700 ppm, 4800 ppm, 4900 ppm, 5000 ppm, 5100 ppm, 5200 ppm, 5300 ppm, 5400 ppm, 5500 ppm, 5600 ppm, 5700 ppm, 5800 ppm, 5900 ppm, or 6000 ppm, or a range between any two of the above values.

By adding one or more elements described above to the first lithium iron phosphate of the embodiment of the present application and making the content within the above ranges, it is possible to more favorably realize metal bulk modification of the first lithium iron particles while ensuring the primary average particle size of the lithium iron phosphate particles, further improving the bulk ion transmission capacity of the lithium iron phosphate particles, and more favorably solving the problem of poor inherent kinetic performance of the large particles.

In any embodiment, the second lithium iron phosphate particles and/or the second lithium manganese iron phosphate particles have a molecular formula of LiₘAₐFe_{f}Mn_{b}D_{d}P_{y}EₑOₚG_{g}, where A includes at least one element of Al, Na, K, or Mg; D includes at least one element of Cu, Cr, Zn, Pb, Ca, Co, Ni, Sr, Nb, Ti, or V; E includes at least one element of B, S, Si, or N; G includes at least one element of F, Cl, or Br; where 0.95≤m≤1.15, 0≤a≤0.1, 0.1≤f≤1, 0.1≤b≤0.9, 0≤d≤0.1, 0.95≤y≤1, 0≤e≤0.1, 3.5≤p≤4, and 0≤g≤0.1.

In the present application, the composition of the second lithium iron phosphate particles and/or the second lithium manganese iron phosphate particles is not particularly limited, and any existing second lithium iron phosphate particles and/or second lithium manganese iron phosphate particles can be used. Exemplarily, in the embodiment of the present application, the above effects of the present application can be better achieved by employing the second lithium iron phosphate particles and/or the second lithium manganese iron phosphate particles having the above composition and forming a double layer structure with the first lithium iron phosphate particles in the embodiment of the present application.

In any embodiment, the first lithium iron phosphate particles, and the second lithium iron phosphate particles and/or the second lithium manganese iron phosphate particles are monocrystalline particles and/or polycrystalline particles. In some embodiments, calculated based on a total particle quantity of the first lithium iron particles, a quantity proportion of the monocrystalline particles is 90% or above.

By adopting the monocrystalline particles of the first lithium iron phosphate in the above proportion in the first active layer of the positive electrode plate of the present application, the phenomenon that polycrystalline particles are crushed in a cold pressing process to cause demoulding can be effectively avoided, so that the binding force between the first active layer and the current collector or the second active layer can be improved, and the kinetic performance and the energy density of the positive electrode plate can be further improved.

In any embodiment, a capacity proportion η of the second lithium iron phosphate particles is ≥88%, where η is defined as follows: a battery including the first lithium iron particles as a positive electrode material is charged and discharged twice at a constant-current rate of 0.1 coulomp (C) and a voltage ranging from 2.0 volt (V) to 3.75 V, and is then charged and discharged once at a constant-current rate of 1 C, in the charge-discharge test at the rate of 1 C, a capacity value extracted when a discharge voltage is 3.2 V is recorded as C1, and a capacity value extracted when the discharge voltage reaches 2.0 V is recorded as C2, η=C1/C2, where the charging process includes constant-voltage charging, the constant voltage is 3.75 V, and a constant-voltage cut-off current is 50 microamp (uA).

The capacity proportion η of the lithium iron phosphate particles of the embodiment of the present application is ≥88%, which means that the first lithium iron particles of the present application can enable the secondary battery to show good kinetic performance when being used as a positive electrode material.

η represents the plateau retention performance of a material, which has a strong correlation with the discharge power performance of the battery. When the value is larger, the battery can still maintain relatively good power performance when the battery is discharged to a low SOC (battery state of charge), i.e., a voltage reduction value of the battery is relatively small when the battery is discharged with a large current at a low battery level. The capacity proportion η of the lithium iron phosphate particles of the embodiment of the present application is ≥88%, which means that the first lithium iron particles of the present application can enable the secondary battery to show good kinetic performance when being used as a positive electrode material.

In any embodiment, a manufacturing process of the first lithium iron phosphate particles includes: provide raw materials containing at least a lithium source, an iron source, a phosphorus source, a carbon source, a carbon film-forming agent, and a modifier, and perform sintering at least twice. A temperature of the first sintering is 500 degrees centigrade (°C) to 760°C, and in some embodiments is 550°C to 720°C, and a carbon content of the material after the first sintering is 0.01 wt% to 0.79 wt%, and in some embodiments is 0.05 wt% to 0.4 wt%. A temperature of the second sintering is 700°C to 800°C, and in some embodiments is 720°C to 780°C, and a carbon content of the material after the second sintering is 0.8 wt% to 2.0 wt%, and in some embodiments is 1.0 wt% to 1.6 wt%.

In some embodiments, the temperature of the first sintering is optionally 500°C, 510°C, 520°C, 530°C, 540°C, 550°C, 560°C, 570°C, 580°C, 590°C, 600°C, 610°C, 620°C, 630°C, 640°C, 650°C, 660°C, 670°C, 680°C, 690°C, 700°C, 710°C, 720°C, 730°C, 740°C, 750°C, or 760°C, or a range between any two of the above values. In some embodiments, the temperature of the second sintering is optionally 700°C, 710°C, 720°C, 730°C, 740°C, 750°C, 760°C, 770°C, 780°C, 790°C, or 800°C, or a range between any two of the above values. The carbon content of the material after the first sintering is optionally 0.01 wt%, 0.05 wt%, 0.10 wt%, 0.15 wt%, 0.2 wt%, 0.25 wt%, 0.3 wt%, 0.35 wt%, 0.4 wt%, 0.45 wt%, 0.5 wt%, 0.55 wt%, 0.6 wt%, 0.65 wt%, 0.7 wt%, 0.75 wt%, 0.79 wt%, and the carbon content of the material after the second sintering is 0.8 wt% to 2.0 wt%, optionally is 0.8 wt%, 0.9 wt%, 1 wt%, 1.1 wt%, 1.2 wt%, 1.3 wt%, 1.4 wt%, 1.5 wt%, 1.6 wt%, 1.7 wt%, 1.8 wt%, 1.9 wt%, or 2.0 wt%, or a range between any two of the above values.

In the preparation method of the first lithium iron phosphate particles according to the embodiment of the present application, sintering is performed twice. By controlling the temperature of the first sintering within the above range and enabling the carbon content of a sintered intermediate within the above range, a lithium iron phosphate precursor obtained after the first sintering can have a relatively large particle size, which directly improves the powder compaction density and electrode plate compaction density of a final product. In addition, by adding a carbon source at a relatively low content during the first sintering, a blocking effect of the carbon layer on the growth process of the lithium iron phosphate particles is greatly reduced, which is conducive to crystallization growth of the particles at a relatively low temperature and is also conducive to a solid-phase diffusion reaction between the modifier and the lithium iron phosphate material, thereby achieving high-concentration metal ion doping. Compared with the traditional method that the particle growth is realized at high temperature, the preparation method of the present application can first synthesize large particles at a lower temperature, which can improve the phenomenon that a carbon layer on the surfaces of the particles is cracked at high temperature, and improve the compactness of surface carbon. Meanwhile, in the first sintering process, the carbon source can effectively reduce ferric iron in the raw material to improve the product purity and stability. By controlling the temperature of the second sintering within the above range and making the carbon content of a sintered material be 0.8 wt% to 2.0 wt%, carbon is coated on the surfaces of the first lithium iron phosphate particles, a first lithium iron phosphate material with a uniform and compact carbon coating layer is formed, and the surface conductivity of the particles is greatly improved.

In any embodiment, first crushing is performed after the first sintering, and second crushing is performed after the second sintering. Dv50 of a product after the first crushing is 300 nm to 1200 nm, and in some embodiments is 400 nm to 1100 nm; and Dv50 of a product after the second crushing is 500 nm to 5000 nm, and in some embodiments is 700 nm to 2500 nm.

In some embodiments, Dv50 of a product after the first crushing is 300 nm, 400 nm, 500 nm, 600 nm, 700 nm, 800 nm, 900 nm, 1000 nm, 1100 nm, or 1200 nm, or a range between any two of the above values. In some embodiments, Dv50 of a product after the second crushing is 500 nm, 600 nm, 700 nm, 800 nm, 900 nm, 1000 nm, 1100 nm, 1200 nm, 1300 nm, 1400 nm, 1500 nm, 1600 nm, 1700 nm, 1800 nm, 1900 nm, 2000 nm, 2300 nm, 2500 nm, 2700 nm, 3000 nm, 3300 nm, 3500 nm, 3700 nm, 4000 nm, 4300 nm, 4500 nm, 4700 nm, 5000 nm, or a range between any two of the above values.

Herein, the term "Dv50" refers to the particle size corresponding to a cumulative volume particle size distribution percentage of 50% in the particles. Dv50 can be determined by the determination method described in examples.

In the preparation method of the first lithium iron phosphate particles according to the embodiment of the present application, crushing after sintering is performed twice. By performing the first crushing after the first sintering, the primary average particle size of the product is enabled to be 300 nm to 1200 nm, so that growth blocking of carbon materials and doping elements on crystals can be avoided, and the micron-sized lithium iron phosphate precursor is obtained. By performing the second crushing after the second sintering, the primary average particle size of the product is enabled to be 500 nm to 3000 nm, so that the first lithium iron phosphate particles with expected particle size can be obtained, the uniform and compact carbon coating layer is obtained, and the surface conductivity of the particles is greatly improved.

In any embodiment, the preparation method of the first iron lithium particles includes the steps of providing a lithium source, an iron source, a phosphorus source, a carbon source, a modifier, and a carbon film-forming agent as raw materials. Based on the atomic mole number of each element, mixing ratios of the lithium source, the iron source, and the phosphorus source satisfy Fe:P=0.96 to 0.985, Li:Fe=1.0-1.1:0.95-1.1; and a weight ratio of the carbon source to the carbon film-forming agent satisfies carbon source:carbon film-forming agent=9:1 to 2:8.

In some embodiments, based on the atomic mole number of each element, the mixing ratio of the iron source to the phosphorus source satisfies Fe:P=0.96:1, Fe:P=0.965:1, Fe:P=0.97:1, Fe:P=0.975:1, Fe:P=0.98:1, or Fe:P=0.985:1.

In some embodiments, based on the atomic mole number of each element, the mixing ratio of the lithium source to the iron source satisfies Li:Fe=1.0:1.1, Li:Fe=0.99:1.1, Li:Fe=0.98:1.1, Li:Fe=0.97:1.1, Li:Fe=0.96:1.1, or Li:Fe=0.95:1.1.

In some embodiments, the weight ratio of the carbon source to the carbon film-forming agent is optionally 9:1, 8:2, 7:3, 6:4, 5:5, 4:6, 3:7, or 2:8.

By using the raw materials containing the lithium source, the iron source, the phosphorus source, the carbon source, the modifier, and the carbon film-forming agent at the above ratios, the primary average particle size, carbon content, BET specific surface area, and z value of the lithium iron phosphate particles according to the first aspect of the present application can be favorably formed. Specifically, as described above, by setting the primary average particle size of the lithium iron phosphate particles of the embodiment of the present application to 500 nm to 3000 nm, the particles can be kept in a suitable micron-level size, thereby avoiding the problems of interfacial side reactions and processing difficulties caused when the particles are nanocrystallized, and not causing the particles to be limited to an excessively large size and causing a decrease in the kinetic performance. In addition, by setting the BET specific surface area of the lithium iron phosphate particles of the embodiment of the present application to 3 m²/g to 8 m²/g, stirring of a slurry containing the lithium iron phosphate particles and improvement of a solid content can be facilitated, and thus the processing problem of a battery cell can be improved, and further a volumetric energy density of the battery can be improved. In addition, by making a ratio z of the BET specific surface area to Cx of the lithium iron phosphate particles of the embodiments of the present application satisfy the range of 1.5≤z≤8.5, the carbon contained in the first lithium iron particles can be made more uniform and compact, thereby improving the surface conductivity of the particles.

In any embodiment, in the preparation method of the first lithium iron particles, the lithium source is a compound of lithium, including one or more of lithium dihydrogen phosphate, lithium oxalate, lithium carbonate, lithium oxide, lithium hydroxide, and lithium acetate, and in some embodiments is lithium carbonate. The iron source is a compound of iron, including at least one of ferric hydroxide, ferrous chloride, ferric oxide, ferric phosphate, ferric pyrophosphate, ferrous oxalate, iron powder, ferric nitrate, ferroferric oxide, and ferric oxyhydroxide, and in some embodiments is ferric oxide. The phosphorus source is a phosphoric acid compound, including one or more of phosphoric acid, ammonium dihydrogen phosphate, and diammonium hydrogen phosphate, and in some embodiments is phosphoric acid. The modifier includes at least one of titanium dioxide, vanadium pentoxide, n-butyl titanate, ammonium metavanadate, niobium ethoxide, niobium oxalate, niobium pentoxide, magnesium hydroxide, and magnesium nitrate, and in some embodiments is titanium dioxide. The carbon source includes at least one of citric acid, glucose, sucrose, starch, fructose, and lactose, and in some embodiments is glucose. The carbon film-forming agent includes one or a combination of several of polyethylene glycol, polyaniline, polyacrylonitrile, polyvinyl pyrrolidone, and polyvinyl alcohol, and in some embodiments is polyaniline.

By selecting the above substances respectively as the lithium source, the iron source, the phosphorus source, the modifier, the carbon source, and the carbon film-forming agent used in the preparation method of the lithium iron phosphate particles according to the embodiment of the present application, the primary average particle size, carbon content, BET specific surface area, and z value of the lithium iron phosphate particles according to the first aspect of the present application can be favorably formed. Thereby achieving a larger particle size of the lithium iron phosphate particles of the embodiment of the present application more well while achieving excellent kinetic performance when it is used as a positive electrode material.

In any embodiment, temperature-rising rates in the first sintering and the second sintering are each independently 2 degrees centigrade/minute (°C/min) to 20°C/min, a constant-temperature time for the first sintering is 1 hour (h) to 6 h, and a constant-temperature time for the second sintering is 2 h to 12 h.

In some embodiments, the temperature-rising rates in the first sintering and the second sintering are each independently 2°C/min, 5°C/min, 7°C/min, 10°C/min, 13°C/min, 15°C/min, 17°C/min, or 20°C/min.

In some embodiments, the constant-temperature sintering time for the first sintering is 1 h to 6 h. In some embodiments, the constant-temperature sintering time for the first sintering is optionally 1 h, 1.5 h, 2 h, 2.5 h, 3 h, 3.5 h, 4 h, 4.5 h, 5 h, 5.5 h, or 6 h.

In some embodiments, the constant-temperature sintering time for the second sintering is 2 h to 12 h. In some embodiments, the constant-temperature sintering time for the second sintering is optionally 1 h, 1.5 h, 2 h, 2.5 h, 3 h, 3.5 h, 4 h, 4.5 h, 5 h, 5.5 h, 6 h, 6.5 h, 7 h, 7.5 h, 8 h, 8.5 h, 9 h, 9.5 h, 10 h, 10.5 h, 11 h, 11.5 h, or 12 h.

By controlling the temperature-rising rates and the constant-temperature times in the first sintering and the second sintering within the above ranges, excessive side reactions during sintering caused by an excessively rapid temperature rise can be prevented, thereby avoiding impact on the primary average particle size, carbon content, BET specific surface area, and z value of the obtained lithium iron phosphate particles. Thereby achieving a larger particle size of the lithium iron phosphate particles of the embodiment of the present application more well while achieving excellent kinetic performance when it is used as a positive electrode material.

In any embodiment, after the first sintering and before the second sintering, a product after the first sintering is subjected to carbon coating, where the amount of the carbon coating is 0.01 wt% to 1.99 wt%, in some embodiments is 0.2 wt% to 1.6 wt%, and in some embodiments is specifically 0.2 wt%, 0.3 wt%, 0.4 wt%, 0.5 wt%, 0.6 wt%, 0.7 wt%, 0.8 wt%, 0.9 wt%, 1.0 wt%, 1.1 wt%, 1.2 wt%, 1.3 wt%, 1.4 wt%, 1.5 wt%, or 1.6 wt%, or a range between any two of the above values.

By coating the product obtained after the first sintering with carbon in the content range described above after the first sintering and before the second sintering, a uniform and compact carbon coating layer can be formed on the surfaces of the lithium iron phosphate particles during the second sintering.

In any embodiment, the carbon coating is performed by vapor deposition during sintering or by carbonizing the carbon source at an elevated temperature to coat carbon.

In the preparation method of the first lithium iron particles according to the embodiment of the present invention, the implementation of carbon coating is not particularly limited. In some embodiments, the first lithium iron particles are subjected to carbon coating by a vapor deposition method, so that a uniform and compact carbon coating layer can be formed on the surfaces of the lithium iron phosphate particles. After the first sintering and the second sintering, a sintered product is crushed, and the crushing is optionally one or more of mechanical crushing, sanding, and airflow crushing.

In the preparation method of the first lithium iron phosphate particles according to the embodiment of the present invention, the crushing manner is not particularly limited, and by using the above specific crushing manners, it is conducive to obtaining the desired primary average particle size.

In any embodiment, the first active layer and the second active layer may further optionally include a conductive agent, a binder, and a dispersant. In the first active layer, a weight ratio of the first lithium iron phosphate particles to the binder to the conductive agent to the dispersant is 96-99:0.5-3:0.5-3:0.5-3, and in some embodiments is 96.5:0.5:2.5:0.5. In the second active layer, a weight ratio of the second lithium iron phosphate particles and/or the second lithium manganese iron phosphate particles to the binder to the conductive agent to the dispersant is 96-99:0.5-3:0.5-3:0.5-3, and in some embodiments is 96:1.0:2.5:0.5. The weight ratio of the binder in the second active layer is less than or equal to the weight ratio of the binder in the first active layer.

In any embodiment, the conductive agent includes any one or a combination of at least two of natural graphite, artificial graphite, conductive carbon black, carbon fiber, carbon nanotube, graphene, and conductive polymer or metal powder, and in some embodiments is conductive carbon black. The binder includes any one or a combination of at least two of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and fluorine-containing acrylic resin, and in some embodiments is polyvinylidene fluoride. The dispersant is not particularly limited as long as it is a dispersant commonly used in the art, and includes PVP (polyvinylpyrrolidone) and the like.

The positive electrode active layer of the present application can be made to better achieve the above effects of the present application by using the specific conductive agent, binder, and further optionally including the conductive agent, the binder, and the dispersant described above, and making the weight ratio of the first lithium iron phosphate particles to the binder to the conductive agent to the dispersant within the above range.

In any embodiment, a weight of the positive electrode active layer on one side of the positive electrode plate is 320 milligrams (mg)/1540 square millimeters (mm²) to 600 mg/1540 mm², and in some embodiments is 400 mg/1540 mm² to 500 mg/1540 mm².

In some embodiments, the weight of the positive electrode active layer on one side of the positive electrode plate is optionally 320 mg/1540 mm², 330 mg/1540 mm², 340 mg/1540 mm², 350 mg/1540 mm², 360 mg/1540 mm², 370 mg/1540 mm², 380 mg/1540 mm², 390 mg/1540 mm², 400 mg/1540 mm², 410 mg/1540 mm², 420 mg/1540mm², mg/1540 mm², 430 mg/1540 mm², 440 mg/1540 mm², 450 mg/1540 mm², 460 mg/1540 mm², 470 mg/1540 mm², 480 mg/1540 mm², 490 mg/1540 mm², 500 mg/1540 mm², 510 mg/1540 mm², 520 mg/1540 mm², 530 mg/1540 mm², 540 mg/1540 mm², 550 mg/1540 mm², 560 mg/1540 mm², 570 mg/1540 mm², 580 mg/1540 mm², 590 mg/1540 mm², or 600 mg/1540 mm², or a range between any two of the above values.

By controlling the weight of the positive electrode active layer on one side of the positive electrode plate within the above range, a higher coating weight on the positive electrode plate can be ensured, and better energy density of the positive electrode plate can be ensured.

In any embodiment, a compaction density of the positive electrode active layer on the positive electrode plate is 2.40 grams/cubic centimeter (g/cm³) to 2.7 g/cm³, and in some embodiments is 2.50 g/cm³ to 2.60 g/cm³.

In some embodiments, the compaction density of the positive electrode active layer on the positive electrode plate is optionally 2.4 g/cm³, 2.5 g/cm³, 2.6 g/cm³, or 2.7 g/cm³, or a range between any two of the above values.

By controlling the compaction density of the positive electrode active layer on the positive electrode plate within the above range, a higher volumetric energy density can be achieved.

### [Current collector]

In the embodiments of the present application, the current collector in the positive electrode plate is not particularly limited. In some embodiments, the positive electrode current collector may employ a metal foil or a composite current collector. For example, aluminum foil may be used as the metal foil. The composite current collector may include a polymer material substrate layer and a metal layer formed on at least one surface of the polymer material substrate layer. The composite current collector may be formed by forming an aluminum foil on a polymer material substrate (such as a substrate of polypropylene (PP), polyethylene terephthalate (PET), polybutylene terephthalate (PBT), polystyrene (PS), and polyethylene (PE)).

### [Negative electrode plate]

The negative electrode plate includes a negative electrode current collector and a negative electrode film layer arranged on at least one surface of the negative electrode current collector, where the negative electrode film layer includes a negative electrode active material.

As an example, the negative electrode current collector has two opposite surfaces in a thickness direction thereof, and the negative electrode film layer is arranged on either one or both of the two opposite surfaces of the negative electrode current collector.

In some embodiments, the negative electrode current collector may employ a metal foil or a composite current collector. For example, copper foil may be used as the metal foil. The composite current collector may include a polymer material substrate layer and a metal layer formed on at least one surface of a polymer material substrate. The composite current collector may be formed by forming a metal material (copper, copper alloy, nickel, nickel alloy, titanium, titanium alloy, silver, silver alloy, and the like) on the polymer material substrate (such as a substrate of polypropylene (PP), polyethylene terephthalate (PET), polybutylene terephthalate (PBT), polystyrene (PS), and polyethylene (PE)).

In some embodiments, the negative electrode active material may employ a well-known negative electrode active material for a battery in the art. As an example, the negative electrode active material may include at least one of the following materials: artificial graphite, natural graphite, soft carbon, hard carbon, silicon-based material, tin-based material, lithium titanate, and the like. The silicon-based material may be at least one selected from elemental silicon, a silicon oxide compound, a silicon-carbon composite, a silicon-nitrogen composite, and a silicon alloy. The tin-based material may be at least one selected from elemental tin, a tin oxide compound, and a tin alloy. However, the present application is not limited to these materials, and other conventional materials that can be used as a battery negative electrode active material may be used. These negative electrode active materials may be used alone or in combination of two or more.

In some embodiments, the negative electrode film layer further optionally includes a binder. The binder may be at least one selected from styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be at least one selected from superconducting carbon, acetylene black, carbon black, ketjen black, carbon dot, carbon nanotube, graphene, and carbon nanofiber.

In some embodiments, the negative electrode film layer further optionally include other adjuvants, for example, a thickener (e.g., sodium carboxymethyl cellulose (CMC-Na)), and the like.

In some embodiments, the negative electrode plate may be prepared by the following method: disperse the components for preparing the negative electrode plate, such as the negative electrode active material, the conductive agent, the binder, and any other components, in a solvent (e.g., deionized water) to form a negative electrode slurry; and coat the negative electrode slurry on the negative electrode current collector, and perform processes such as drying and cold pressing to obtain the negative electrode plate.

### [Electrolyte]

The electrolyte plays a role in conducting ions between the positive electrode plate and the negative electrode plate. The type of the electrolyte is not particularly limited in the present application, and it may be selected according to demands. For example, the electrolyte may be in a liquid state, a gel state, or an all-solid state.

In some embodiments, the electrolyte adopts an electrolyte solution. The electrolyte solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally includes an additive. For example, the additive may include a negative electrode film-forming additive and a positive electrode film-forming additive, and may further include additives that can improve certain performance of the battery, for example, an additive that improves the overcharging performance of the battery and an additive that improves the high-temperature or low-temperature performance of the battery.

### [Separator]

In some embodiments, the secondary battery further includes a separator. The type of the separator is not particularly limited in the present application, and any well-known separator of a porous structure having good chemical stability and mechanical stability may be selected.

In some embodiments, a material of the separator may be at least one selected from glass fiber, nonwoven fabric, polyethylene, polypropylene, and polyvinylidene fluoride. The separator may be a single-layer film or a multilayer composite film, which is not particularly limited. In a case that the separator is a multilayer composite film, materials of layers may be the same or different, which is not particularly limited.

### [Secondary battery]

In one embodiment of the present application, a secondary battery is provided, which includes the positive electrode plate.

In general, a secondary battery includes a positive electrode plate, a negative electrode plate, an electrolyte, and a separator. During charging and discharging of a battery, active ions are intercalated and deintercalated back and forth between the positive electrode plate and the negative electrode plate. The electrolyte plays a role in conducting ions between the positive electrode plate and the negative electrode plate. The separator is arranged between the positive electrode plate and the negative electrode plate, and mainly plays a role in preventing a short circuit between a positive electrode and a negative electrode while allowing the ions to pass through.

In some embodiments, the positive electrode plate, the negative electrode plate, and the separator may be manufactured into an electrode assembly by a winding process or a laminating process.

In some embodiments, the secondary battery may include an outer packaging. The outer packaging may be used for encapsulating the electrode assembly and the electrolyte.

In some embodiments, the outer packaging of the secondary battery may be a hard shell, such as a hard plastic shell, an aluminum shell, or a steel shell. The outer packaging of the secondary battery may also be a soft packaging, such as a bag-type soft packaging. A material of the soft packaging may be plastic, and examples of plastic may include polypropylene, polybutylene terephthalate, polybutylene succinate, and the like.

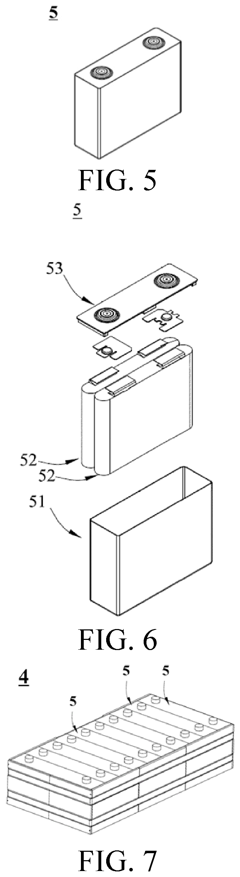

A shape of the secondary battery is not particularly limited in the present application, and the secondary battery may be in a cylinder shape, a square shape, or any other shapes. For example, FIG. 5 shows a secondary battery 5 of a square structure as an example.

In some embodiments, referring to FIG. 6, the outer packaging may include a case 51 and a cover plate 53. The case 51 may include a bottom plate and side plates connected to the bottom plate, and the bottom plate and the side plates are enclosed to form an accommodating cavity. The case 51 is provided with an opening in communication with the accommodating cavity, and the cover plate 53 may cover the opening to close the accommodating cavity. The positive electrode plate, the negative electrode plate, and the separator may be formed into an electrode assembly 52 by a winding process or a laminating process. The electrode assembly 52 is encapsulated in the accommodating cavity. The electrolyte solution is impregnated in the electrode assembly 52. The number of electrode assemblies 52 included in the secondary battery 5 may be one or more, and those skilled in the art may select according to specific actual demands.

In some embodiments, the secondary batteries may be assembled into a battery module, and the number of secondary batteries included in the battery module may be one or more, and the specific number may be selected by those skilled in the art according to the application and capacity of the battery module.

FIG. 7 shows a battery module 4 as an example. Referring to FIG. 7, in the battery module 4, a plurality of secondary batteries 5 may be sequentially arranged along a length direction of the battery module 4. Certainly, the arrangement may also be performed in any other manner. Further, the plurality of secondary batteries 5 may be fixed by fasteners.

Alternatively, the battery module 4 may further include a shell having an accommodating space, and the plurality of secondary batteries 5 are accommodated in the accommodating space.

In some embodiments, the above battery modules may be further assembled into a battery pack, and the number of battery modules included in the battery pack may be one or more, and a specific number may be selected by those skilled in the art according to the application and capacity of the battery pack.

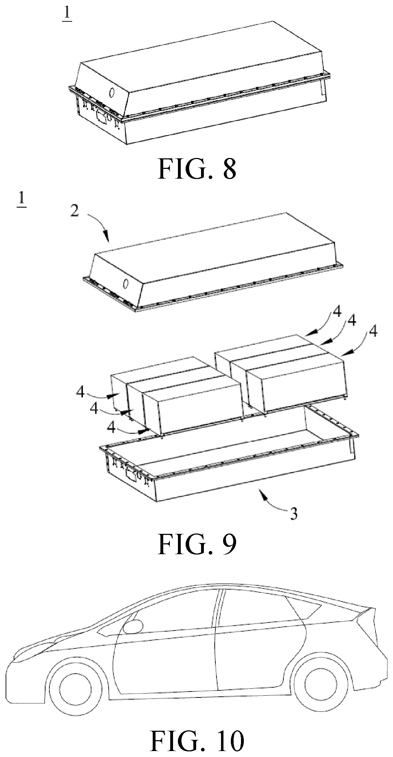

FIG. 8 and FIG. 9 show a battery pack 1 as an example. Referring to FIG. 8 and FIG. 9, the battery pack 1 may include a battery box and a plurality of battery modules 6 arranged in the battery box. The battery box includes an upper box 2 and a lower box 3. The upper box 2 may cover the lower box 3 to form a closed space for accommodating the battery modules 4. The plurality of battery modules 4 may be arranged in the battery box in any manner.

### [Electrical apparatus]

In addition, the present application further provides an electrical apparatus. The electrical apparatus includes at least one of the secondary battery, the battery module, or the battery pack provided in the present application. The secondary battery, the battery module, or the battery pack may be used as a power source of the electrical apparatus, and may also be used as an energy storage unit for the electrical apparatus. The electrical apparatus may include, but is not limited to, a mobile device (for example, a mobile phone or a notebook computer), an electric vehicle (for example, an all-electric vehicle, a hybrid electric vehicle, a plug-in hybrid electric vehicle, an electric bicycle, an electric scooter, an electric golf cart, or an electric truck), an electric train, a ship, a satellite, an energy storage system, and the like.

The secondary battery, the battery module, or the battery pack may be selected according to use requirements of the electrical apparatus.

FIG. 10 shows an electrical apparatus as an example. The electrical apparatus is an all-electric vehicle, a hybrid electric vehicle, or a plug-in hybrid electric vehicle. To meet the requirements of the electrical apparatus on high power and high energy density of the secondary battery, the battery pack or the battery module may be used.

As an another example, the apparatus may be a mobile phone, a tablet computer, a notebook computer, and the like. The apparatus is generally required to be light and thin, and the secondary battery may be used as a power source.

### Examples

Examples of the present application are described below. The examples described below are exemplary and only intended to explain the present application, and cannot be construed as limitations on the present application. If no specific techniques or conditions are specified in the examples, the techniques or conditions described in the literatures in the art or in accordance with the product specification shall be followed. The reagents or instruments used without manufacturer indicated are all commercially available conventional products.

### Example 1

### 1. Preparation of lithium iron phosphate particles

### 1) Preparation of first lithium iron phosphate particles

Lithium carbonate, ferric oxide, phosphoric acid, glucose, titanium dioxide (based on a total weight of the lithium iron phosphate particles, an addition amount of the titanium dioxide should meet the requirement that a titanium content in the prepared lithium iron phosphate particles was 5000 ppm), and polyaniline were respectively weighed, where weight ratios of Li element, Fe element, and P element satisfied Fe:P=0.968:1, Li:Fe=1:0.98, and a weight ratio of glucose to polyaniline satisfied glucose:polyaniline=1:2. An addition amount of the glucose should meet the requirement that a carbon content accounted for 0.15 % of a weight of a lithium iron phosphate precursor after first sintering was completed. Water was added to the above materials to obtain a mixture slurry.

The mixture slurry was uniformly mixed using a ball mill, and ground with a sand mill to obtain a slurry with a solid content of 38% and Dv50 of 0.40 um, and the slurry was spray dried (for a high-speed spray dryer, a negative pressure was -650 pascals (Pa) to -200 Pa, an inlet temperature was 300°C to 360°C, and an outlet temperature was 100°C to 140°C). The dried reactant was fed into a sintering furnace for first sintering, where a temperature-rising rate was controlled to be 5°C/min, a holding temperature was controlled at 650°C, and a holding time was 4 h. After the materials were cooled down, the materials were crushed with a mechanical mill to obtain powder.

Glucose as a carbon source and polyaniline as a carbon film-forming agent were added to the obtained powder, and then mixed with water to obtain a material with a solid content of 40%. Addition amounts of the glucose and the polyaniline should meet the requirement that a carbon content of a product after second sintering was 1.2% (based on the total weight of the lithium iron phosphate particles), and a weight ratio of glucose to polyaniline satisfied glucose:polyaniline=1:2. The materials were processed with a ball mill and a sand mill to obtain a slurry, and Dv50 of insoluble matters in the slurry was 550 nm. The slurry was spray dried (for a high-speed spray dryer, a negative pressure was -650 Pa to -200 Pa, an inlet temperature was 300°C to 360°C, and an outlet temperature was 100°C to 140°C). The dried reactant was fed into the sintering furnace for second low-temperature sintering, where a temperature-rising rate was controlled to be 5°C/min, a sintering temperature was 750°C, and a sintering time was 4 h. After the materials were cooled down, the materials were subjected to second crushing to a primary average particle size of 870 nm, and demagnetized to obtain the lithium iron phosphate particles, where a carbon content was 1.2%, and a content of Ti element in the lithium iron phosphate particles was 5000 ppm.

### 2) Preparation of second lithium iron phosphate particles

The second lithium iron phosphate particles used in the present application were purchased from Guangdong Brunp Recycling Technology Co., Ltd., with the product number of BP-LFP-101; and the second lithium manganese iron phosphate particles were purchased from Guangdong Brunp Recycling Technology Co., Ltd., with the product number of BP-115.

### 2. Preparation of active layer slurry

### 1) Preparation of first active layer slurry

The first lithium iron phosphate particles, conductive carbon black serving as a conductive agent, polyvinylidene fluoride serving as a binder, and PVP (polyvinylpyrrolidone) serving as a dispersant were mixed according to a mass ratio of 96.5:2.5:0.5:0.5, where large-particle lithium iron phosphate was monocrystal lithium iron phosphate with an olivine structure, a BET specific surface area was 7 m²/g, particle size Dv50 was 2.0 µm, and a primary average particle size was 500 nm. The materials containing the positive electrode active material were mixed, certain amount of N-methylpyrrolidone was added, mixed and stirred, and uniformly dispersed to prepare the first active layer slurry.

### 2) Preparation of second active layer slurry

The second lithium iron phosphate particles of a second active layer slurry material, conductive carbon black serving as a conductive agent, polyvinylidene fluoride serving as a binder, and PVP (polyvinylpyrrolidone) serving as a dispersant were mixed according to a mass percentage of 96.0:2.5:1.0:0.5, certain amount of N-methylpyrrolidone was added, uniformly mixed, stirred, and dispersed to prepare the second active layer slurry. A BET specific surface area of the second lithium iron phosphate particles was greater than that of the first lithium iron phosphate particles, and the second lithium iron phosphate particles had a primary average particle size of 360 nm and D50 of 1.0 µm.

### 3. Preparation of positive electrode plate

After an oil-based slurry prepared in the above steps was stirred uniformly, a viscosity of the slurry was regulated to be in the range of 8000 millipascals/second (Pa.s) to 20000 Pa.s, so that the prepared slurry was not layered, then the slurry was coated on a substrate aluminum foil through a double-sided double-cavity coating device, where a coating weight of the first active layer slurry was 100 mg/1540.25 square centimeters (cm²), and a coating weight of the second positive electrode slurry was 300 mg/1540.25 cm². After the coating of the first active layer slurry and the second positive electrode slurry was completed, drying, cold pressing, slitting, and tabletting were sequentially performed to finally obtain the positive electrode plate.

### 4. Preparation of negative electrode plate

Artificial graphite serving as a negative electrode active material, conductive carbon black serving as a conductive agent, styrene-butadiene rubber (SBR) serving as a binder, and sodium carboxymethyl cellulose (CMC) serving as a thickener were mixed according to a mass ratio of 95.0:1.0:2.0:2.0, and deionized water was added, stirred, uniformly dispersed to prepare a negative electrode slurry. The negative electrode slurry was coated on two sides of a substrate Cu foil by a double-sided coater, and after both sides were coated, drying, cold pressing, slitting, and tabletting were performed to prepare the negative electrode plate.

### 5. Preparation of electrolyte solution

In a glove box in an argon atmosphere (H₂O<0.1 ppm, O₂<0.1 ppm), organic solvents ethylene carbonate (EC) and ethyl methyl carbonate (EMC) were mixed evenly according to a volume ratio of 3:7, and an LiPF₆ lithium salt was dissolved in the organic solvents to prepare a solution with a weight content of 12.5%, thereby obtaining the electrolyte solution.

### 6. Separator

A polypropylene film was used as a separator.

### 7. Preparation of battery

The positive electrode plate, the separator, and the negative electrode plate of Example 1 were laminated sequentially, where the separator was located between the positive electrode plate and the negative electrode plate for separation, and then, a bare battery cell was obtained by winding. The bare battery cell was welded with tabs, filled into an aluminum shell, and baked at 80°C to remove water. Then, the electrolyte solution was immediately injected, and an opening was sealed to obtain an uncharged battery. The uncharged battery was then subjected to standing, hot and cold pressing, formation, shaping, capacity test, and other working procedures in sequence to obtain a lithium-ion battery product of Example 1.

The lithium-ion battery obtained in Example 1 was subjected to the performance test described later, and results are shown in 1.

Examples 2 to 14 and comparative examples 1 to 7 were obtained in the same manner as in the examples except that the respective parameters of the first lithium iron phosphate particles and the second lithium iron phosphate particles in the positive electrode plate (where the second lithium iron phosphate particles in Example 8 were lithium manganese iron phosphate particles available from Guangdong Brunp Recycling Technology Co., Ltd., with the product number of BP-115) were changed as shown in Table 1. The binding force, the electrode plate compaction density, and the kinetic performance of the obtained positive electrode plate were respectively determined.

### I. Parameter determination of battery components

### 1. Primary average particle size

An electrode plate is cut perpendicular to a larger surface of the electrode plate using an argon ion beam to expose a cross-section. The cross-section is photographed using a scanning electron microscope. The longest diameters of the lithium (manganese) iron phosphate particles are statistically analyzed using a length-diameter statistical method. The term "primary average particle size" refers to an average value of primary particle sizes of all particles, and is equal in value to the total particle size value divided by the total quantity of particles. The primary particle size in the cross section view refers to the longest distance between two points connected along an edge. Specifically, the total quantity of lithium (manganese) iron phosphate particles having a primary particle size greater than 50 nm and the sum of the primary particle sizes of the lithium (manganese) iron phosphate particles having the primary particle size greater than 50 nm can be counted in an electron microscope scanning photograph, where the primary average particle size of the lithium (manganese) iron phosphate particles=the total primary particle sizes of the lithium (manganese) iron phosphate particles/the total quantity of the lithium (manganese) iron phosphate particle. In the particle size statistics process, particles with a primary average particle size of less than or equal to 50 nm are not counted into the statistical range.

### 2. BET specific surface

The specific surface area is tested by a gas adsorption method according to GB/T19587-2017 test standard. Specifically, the lithium (manganese) iron phosphate particles are taken as a sample, a sample tube is immersed in liquid nitrogen at a temperature of -196°C, an adsorption capacity of nitrogen on a solid surface under different pressures is determined under a relative pressure of 0.05 to 0.30, and a monolayer adsorption capacity of the sample is obtained based on the BET multilayer adsorption theory and a formula thereof, so that the specific surface area of the material is calculated.

### 3. Dv50

Referring to GB/T19077.1-2016, a Dv50 value of the lithium (manganese) iron phosphate particles is determined using a laser particle Size analyzer (Malvern Master Size 3000). In addition, Dv10, Dv90, and Dv99 of the present application are also determined in the same manner.

### 4. Carbon content

After burning the lithium (manganese) iron phosphate particles using a high frequency induction furnace, the carbon content is tested using an infrared absorption method, and the specific test procedure is in accordance with standard GB/T 20123-2006/ISO 15350:2000.

### 5. Porosity

According to mercury porosimetry, a PoreMaster 60 mercury porosimeter (Quantachrome Instruments, U.S.) is used for applying a pressure of about 0.6 PSI to 50 PSI (corresponding pore diameters may be 355 µm to 4 µm) in a low pressure station (LP), and applying a pressure of 20 PSI to 60000 PSI (corresponding pore diameters may be 10 µm to 0.004 µm) in a high pressure station (HP). Pore structures within a suitable range can be measured by adjusting the pressure. The specific operation method is that a cone penetrometer made of glass is used as a sample container, a sample is added into the cone penetrometer, and the pressure is applied to the sample for measurement.

### 6. Binding force

A steel plate with a flat appearance is selected, a surface of the steel plate is wiped using dust-free paper and alcohol, a double-sided tape (model: nitto tape) with a width of 20 millimeters (mm) and a length of 150 mm is pasted on the steel plate, the tape is parallel to an edge of the steel plate and distances between the tape and two edges of the steel plate are equal. A positive electrode plate to be tested is taken, a sample with a width of 25 mm and a length of 160 mm is cut using a blade, the cut sample of the electrode plate is pasted on the double-sided tape, and an edge of the electrode plate is aligned with the edge of the steel plate, so as to ensure that the electrode plate is flatly pasted with the double-sided tape. A paper tape is inserted above or below when the length of the steel plate is longer than the length of the electrode plate, fixed with a crepe adhesive tape, where a test side is facing upwards, and rolled back and forth for 3 to 4 times by using a compression roller with a weight of 2 kg. The paper tape is folded upward and one end of the steel plate, which is not pasted with the electrode plate, is fixed with a lower clamp, and an upper clamp is used for clamping the paper tape to be parallel to the steel plate. A test is carried out on a computer connected with a tensile machine (model: INSON), first 10 mm is pre-pulled at a speed of 50 mm/min, and a displacement distance is 40 mm, after data is obtained, data of 20 mm to 40 mm is extracted. 10 mm is pre-pulled for each test, the test is repeated for four times, and an average value is taken as the binding force.

### II. Determination of battery performance

### 2. Capacity proportion (η value) of battery discharged at 1 C to 3.2 V

The preparation and testing process of the battery is as follows: 2.0000 g of sample is mixed with 0.1111 g of conductive carbon black and 0.1111 g of PVDF at a mass ratio of 0.9:0.05:0.05, then 2.5 g of organic solvent NMP (N-methylpyrrolidone) is added; after being sufficiently and uniformly mixed, the mixture is coated on an aluminum foil to form a film having a thickness of 140 µm, vacuum-dried at 120°C for 2 h, punched into 13 mm circular sheets using a puncher, pressed under 10 megapascals (MPa) using a tablet press, and kept under vacuum at 120°C for 12 h; the weight of the positive electrode plate is then weighted, where a loading amount of active substances is 11 mg to 12 mg. A button battery is assembled in a glove box under argon protection, a metal lithium plate is used as a negative electrode, an electrolyte solution is a mixed solvent of EC (ethylene carbonate) and DMC (1,2-dimethyl carbonate) at a volume ratio of 1:1, electrolyte is LiPF₆, and a separator is a Celgard2400 microporous polyethylene film. The electrical performance of the assembled battery is tested on a blue electric tester. Within a voltage range of 2.0 V to 3.75 V, the battery is charged/discharged at a constant current of 0.1 C for two weeks, and then charged/discharged at a constant current of 1 C for two weeks to test the specific capacity. The charging process has a constant voltage process, the constant voltage is 3.75 V, and a constant-voltage cut-off current is 50 uA.

A battery including the first lithium iron particles as a positive electrode material is charged and discharged twice at a constant-current rate of 0.1 C and a voltage ranging from 2.0 V to 3.75 V, and is then charged and discharged once at a constant-current rate of 1 C, in the charge-discharge test at the rate of 1 C, a capacity value extracted when a discharge voltage is 3.2 V is recorded as C1, and a capacity value extracted when the discharge voltage reaches 2.0 V is recorded as C2, η=C1/C2, where the charging process comprises constant-voltage charging, the constant voltage is 3.75 V, and a constant-voltage cut-off current is 50 uA.

### 3. Compaction density of electrode plate

The compaction density of a film on one side of the electrode plate = m/(V1-V2), where m represents the weight of the film, V1 represents the volume of the electrode plate, and V2 represents the volume of the current collector. m is obtained by subtracting the weight of the current collector from the weight of the electrode plate; the product of the surface area of the electrode plate and the thickness of the electrode plate is the volume V1 of the electrode plate; the product of the surface area of the electrode plate and the thickness of the current collector is the volume V2; and the thickness of the current collector and the thickness of the electrode plate are obtained by measuring the thickness of the empty foil in the tab region by a ten thousandths micrometer.

### 4. Determination of kinetic performance

The kinetic performance of the battery in the present application is embodied as measurement of direct current internal resistance (power performance).

### Power performance test at 25°C:

Capacity calibration: after the lithium-ion battery prepared in each example and comparative example is kept at 25°C for 2 h, the lithium-ion battery is charged to 3.65 V at a constant current of 0.33 C, and charged to 0.05 C at the constant voltage of 3.65 V, the battery to be tested is stationary for 2 h at 25°C after the charging is finished, then discharged to 2.5 V at a direct current of 0.33 C, and a normal-temperature discharge capacity of the lithium-ion battery is recorded to be C0;

SOC (state of charge of battery) adjustment: after the lithium-ion battery with calibrated capacity is kept at 25°C for 2 h, the battery is discharged at a discharge rate of 1/3 C0 for 144 min to adjust the capacity of the lithium-ion battery to 10% SOC;

Power test: the lithium-ion battery at 10% SOC is allowed to stand at 25°C for 2 h, and is then discharged for 30 seconds (s) at a discharge rate of 3 C0 under a pulse current I; the voltage before 3 C0 discharge is recorded as V1, and the voltage at the end of 30 s discharge is recorded as V2; the value of (V1-V2)/I is calculated, and the data can be used for characterizing the power performance of the battery. The lower the value of the above kinetic performance is, the more excellent the kinetic performance of the battery is.

### III. Parameters and performance in examples and comparative examples

Batteries of each example and comparative example were prepared respectively according to the above methods, and each performance parameter was measured, specifically as shown in Table 1.

**Table 1**

| | **First lithium iron phosphate particles** | | | | | | **Second lithium iron phosphate particles** | | | | **Binding force (N/m)** | **Electrode plate compaction density (g/cm³)** | **10%SOC DCR(m Ω)** |
|---|---|---|---|---|---|---|---|---|---|---|---|---|---|
| **Examples** | **Primary average particle size (nm)** | **η value (%)** | **Thickness of located layer (µm)** | **BET specific surface area (m²/g )** | **Porosity (%)** | **Ti content (ppm )** | **Primary average particle size (nm)** | **Thickness of located layer (µm)** | **BET specific surface area (m²/g )** | **Porosity (%)** | | | |
| Examples 1 | 500 | 94.1 | 25 | 7 | 31.5 | 5000 | 360 | 81 | 12.8 | 29 | 14 | 2.52 | 1250 |
| Examples 2 | 870 | 92.2 | 25 | 6 | 32 | 5000 | 360 | 81 | 12.8 | 29 | 15 | 2.53 | 1330 |
| Examples 3 | 3000 | 90.1 | 25 | 5 | 32.5 | 5000 | 360 | 81 | 12.8 | 29 | 16 | 2.51 | 1370 |
| Examples 4 | 870 | 92.2 | 15 | 6 | 32 | 5000 | 360 | 91 | 12.8 | 29 | 15 | 2.54 | 1340 |
| Examples 5 | 870 | 92.2 | 60 | 6 | 32 | 5000 | 360 | 46 | 12.8 | 29 | 15 | 2.5 | 1300 |
| Examples 6 | 870 | 88.1 0 | 25 | 3 | 32 | 5000 | 360 | 81 | 12.8 | 29 | 17 | 2.52 | 1390 |
| Examples 7 | 870 | 94.5 0 | 25 | 8 | 32 | 5000 | 360 | 81 | 12.8 | 29 | 13 | 2.51 | 1280 |
| Examples 8 | 870 | 92.2 | 25 | 6 | 32 | 5000 | 360 | 81 | 12.8 | 29 | 15 | 2.42 | 1140 |
| Examples 9 | 870 | 90 | 25 | 6 | 32 | 2500 | 360 | 81 | 12.8 | 29 | 15 | 2.53 | 1380 |
| Examples 10 | 870 | 95 | 25 | 6 | 32 | 6000 | 360 | 81 | 12.8 | 29 | 15 | 2.54 | 1250 |
| Examples 11 | 870 | 92.2 | 25 | 6 | 36 | 5000 | 360 | 81 | 12.8 | 29 | 13 | 2.5 | 1280 |
| Examples 12 | 870 | 92.2 | 25 | 6 | 28 | 5000 | 360 | 81 | 12.8 | 29 | 14 | 2.56 | 1390 |
| Examples 13 | 870 | 92.2 | 25 | 6 | 32 | 5000 | 360 | 81 | 12.8 | 24 | 15 | 2.58 | 1380 |
| Examples 14 | 870 | 92.2 | 25 | 6 | 32 | 5000 | 360 | 81 | 12.8 | 32 | 15 | 2.5 | 1280 |
| Comparative example 1 | Not set | | | | | | 360 | 106 | 12.8 | 29% | 6 | 2.55 | 1680 |
| Comparative example 2 | 870 | 92.2 | 25 | 6 | 32 | 5000 | 120 | 81 | 14.5 | 29% | 15 | 2.35 | 1250 |
| Comparative example 3 | 870 | 92.2 | 25 | 6 | 32 | 5000 | 800 | 81 | 11.5 | 29% | 15 | 2.38 | 1380 |
| Comparative example 4 | 4000 | 84.7 | 25 | 6 | 32 | 5000 | 360 | 81 | 12.8 | 29% | 13.5 | 2.47 | 1520 |
| Comparative example 5 | 300 | 95.1 | 25 | 9 | 31 | 5000 | 360 | 81 | 12.8 | 29% | 12 | 2.39 | 1210 |
| Comparative example 6 | 870 | 92.2 | 90 | 6 | 32 | 5000 | 360 | 16 | 12.8 | 29% | 15 | 2.41 | 1250 |
| Comparative example 7 | 870 | 92.2 | 5 | 6 | 32 | 5000 | 360 | 101 | 12.8 | 29% | 7 | 2.52 | 1620 |

As can be seen from Table 1, the positive electrode plates obtained from Examples 1 to 14 of the present application meet the limitations of the present application, with the result that the η values thereof are all greater than or equal to 88%, it indicates that the discharge power performance of the battery is high, the battery can still maintain relatively good power performance when the battery is discharged to a low SOC (battery state of charge), i.e., a voltage reduction value of the battery is relatively small when the battery is discharged with a large current at a low battery level. In addition, the positive electrode plates in the examples have excellent binding force, compaction density, and kinetic performance.

In addition, as can be seen from Table 1, in comparative examples 1 to 7, by changing the parameter characteristics of the first lithium iron phosphate particles or the second lithium iron phosphate particles themselves, at least one of the binding force, the compaction density, and the kinetic performance of the resulting positive electrode plate is significantly reduced, and it is apparent that the requirements of the present application cannot be satisfied.

It should be noted that the present application is not limited to the embodiments described above. The above embodiments are merely examples, and embodiments having substantially the same configuration and the same effects as those of the technical idea within the scope of the present application are included in the technical scope of the present application. Further, various modifications that can be made to the embodiments and other modes of combining some of the constituent elements in the embodiments, which are conceivable to those skilled in the art, are also included in the scope of the present application within the scope not departing from the gist of the present application.

## Claims

1. A positive electrode plate, comprising a current collector and a positive electrode active layer, wherein the positive electrode active layer is arranged on at least one surface of the current collector,
the positive electrode active layer comprises a first active layer directly arranged on the current collector, and a second active layer arranged on a surface of one side of the first active layer away from the current collector,
the first active layer comprises first lithium iron phosphate particles, and a thickness of the first active layer ranges from 15 µm to 60 µm,
the second active layer comprises second lithium iron phosphate particles and/or second lithium manganese iron phosphate particles, and a thickness of the second active layer ranges from 60 µm to 130 µm, and
a primary average particle size of the first lithium iron phosphate particles is 500 nm to 3000 nm, and a primary average particle size of the second lithium iron phosphate particles and/or the second lithium manganese iron phosphate particles is 150 nm to 480 nm.

2. The positive electrode plate according to claim 1, wherein a binding force f between the first active layer and the current collector satisfies 8 N/m≤f≤30 N/m.

3. The positive electrode plate according to claim 1 or 2, wherein a weight ratio of the first lithium iron phosphate particles to the second lithium iron phosphate particles and/or the second lithium manganese iron phosphate particles is 1:2 to 1:10.

4. The positive electrode plate according to any one of claims 1 to 3, wherein a porosity of the first lithium iron phosphate particles is greater than that of the second lithium iron phosphate particles and/or the second lithium manganese iron phosphate particles.

5. The positive electrode plate according to claim 4, wherein the porosity of the first lithium iron phosphate particles is 28% to 36%, and the porosity of the second lithium iron phosphate particles and/or the second lithium manganese iron phosphate particles is 24% to 32%.

6. The positive electrode plate according to any one of claims 1 to 5, wherein a BET specific surface area of the first lithium iron phosphate particles is 3 m²/g to 8 m²/g, and a BET specific surface area of the second lithium iron phosphate particles and/or the second lithium manganese iron phosphate particles is 10 m²/g to 18 m²/g.

7. The positive electrode plate according to any one of claims 1 to 6, wherein the first lithium iron phosphate particles comprise carbon, and calculated based on a total weight of the first lithium iron phosphate particles, a carbon content is 0.8 wt% to 2.0 wt%.

8. The positive electrode plate according to any one of claims 1 to 7, wherein the first lithium iron phosphate particles have a molecular formula of LiₘFeₓP_{y}OⱼQ_{q}, wherein Q comprises at least one of Al, Na, K, Mg, Cu, Mn, Cr, Zn, Pb, Ca, Co, Ni, Sr, Nb, V, Ti, B, S, Si, N, S, F, Cl, and Br, 0.95≤m≤1.15, 0.9≤x≤1, 0.95≤y≤1, 3.5≤j≤4, and 0<q≤0.1.

9. The positive electrode plate according to claim 8, wherein Q comprises at least one of Ti, V, Mg, and Nb,
and calculated based on the total weight of the first lithium iron phosphate particles, a content of Q is 1000 ppm to 10000 ppm.

10. The positive electrode plate according to any one of claims 1 to 9, wherein the second lithium iron phosphate particles and/or the second lithium manganese iron phosphate particles have a molecular formula of LiₘAₐFe_{f}Mn_{b}D_{d}P_{y}EₑOₚG_{g}, wherein
A comprises at least one element of Al, Na, K, or Mg;
D comprises at least one element of Cu, Cr, Zn, Pb, Ca, Co, Ni, Sr, Nb, Ti, or V;
E comprises at least one element of B, S, Si, or N; and
G comprises at least one element of F, Cl, or Br; wherein
0.95≤m≤1.15, 0≤a≤0.1, 0.1≤f≤1, 0.1≤b≤0.9, 0≤d≤0.1, 0.95≤y≤1, 0≤e≤0.1, 3.5≤p≤4, and 0≤g≤0.1.

11. The positive electrode plate according to any one of claims 7 to 10, wherein the first lithium iron phosphate particles, and the second lithium iron phosphate particles and/or the second lithium manganese iron phosphate particles are monocrystalline particles and/or polycrystalline particles.

12. The positive electrode plate according to any one of claims 1 to 11, wherein
a capacity proportion η of the first lithium iron phosphate is ≥88%, wherein η is defined as follows: a battery comprising the first lithium iron phosphate particles as a positive electrode material is charged and discharged twice at a constant-current rate of 0.1 C and a voltage ranging from 2.0 V to 3.75 V, and is then charged and discharged once at a constant-current rate of 1 C, in the charge-discharge test at the rate of 1 C, a capacity value extracted when a discharge voltage is 3.2 V is recorded as C1, and a capacity value extracted when the discharge voltage reaches 2.0 V is recorded as C2, η=C1/C2, wherein the charging process comprises constant-voltage charging, the constant voltage is 3.75 V, and a constant-voltage cut-off current is 50 uA.

13. The positive electrode plate according to any one of claims 1 to 12, wherein a manufacturing process of the first lithium iron phosphate particles comprises:
providing raw materials containing at least a lithium source, an iron source, a phosphorus source, and a carbon source, and performing sintering at least twice, wherein
a temperature of the first sintering is 500°C to 760°C, and a carbon content of the material after the first sintering is 0.01 wt% to 0.79 wt%; and
a temperature of the second sintering is 700°C to 800°C, and a carbon content of the material after the second sintering is 0.8 wt% to 2.0 wt%.

14. The positive electrode plate according to claim 13, wherein first crushing is performed after the first sintering, and second crushing is performed after the second sintering, wherein
Dv50 of a product after the first crushing is 300 nm to 1200 nm; and
Dv50 of a product after the second crushing is 500 nm to 5000 nm.

15. The positive electrode plate according to any one of claims 1 to 14, wherein the first active layer and the second active layer further comprise a conductive agent and a binder, wherein
a weight ratio of the binder in the second active layer is less than or equal to a weight ratio of the binder in the first active layer.

16. The positive electrode plate according to claim 15, wherein the conductive agent comprises any one or a combination of at least two of natural graphite, artificial graphite, conductive carbon black, carbon fiber, carbon nanotube, graphene, and conductive polymer or metal powder, optionally is conductive carbon black, and
the binder comprises any one or a combination of at least two of polyvinylidene fluoride, a copolymer of vinylidene fluoride and hexafluoropropylene, or polytetrafluoroethylene, optionally is polyvinylidene fluoride.

17. The positive electrode plate according to any one of claims 1 to 16, wherein a weight of the positive electrode active layer on one side of the positive electrode plate is 320 mg/1540 mm² to 600 mg/1540 mm².

18. The positive electrode plate according to any one of claims 1 to 17, wherein a compaction density of the positive electrode active layer on the positive electrode plate is 2.40 g/cm³ to 2.7 g/cm³.

19. A secondary battery, comprising the positive electrode plate according to any one of claims 1 to 18.

20. An electrical apparatus, comprising the secondary battery according to claim 19.
